# EUROPEAN PATENT SPECIFICATION

(11) **EP 1 714 143 B1**
(45) Date of publication and mention of the grant of the patent: **02.07.2008**
(21) Application number: 04707233.5
(22) Date of filing: 02.02.2004
(51) Int. Cl.: G01N 27/447, B01L 3/00

(54) **CHARGED PARTICLE REDUCTION IN ANALYTE PROCESSING**
REDUKTION GELADENER PARTIKEL BEI DER ANALYTBEARBEITUNG
REDUCTION DE PARTICULES CHARGEES DANS LE TRAITEMENT D'ANALYTES

(43) Date of publication of application: 25.10.2006
(73) Proprietor: Agilent Technologies, Inc., Santa Clara, CA 95051 (US)
(72) Inventor: LÜDKE, Gerd, 71088 Holzgerlingen (DE)
(74) Representative: Barth, Daniel Mathias
(86) International application number: PCT/EP2004/050069
(87) International publication number: WO 2005/075971

(56) References cited:
- EP-A- 0 816 837
- US-A- 5 632 957
- US-A- 5 705 813
- US-A- 5 779 868
- US-A- 2002 125 134
- US-A- 2002 144 895
- US-B1- 6 284 117
- US-B1- 6 458 256

## Description

### BACKGROUND

The present invention relates to processing analytes.

Analytes, for example, can be molecules like nucleic acids, polypeptides or other organic small analytes. The analytes are normally dissolved in a solution, for example a buffer. The analytes can be processed e. g. by using gel electrophoresis or chromatography. These analyzing techniques are often very sensitive to the solution containing the molecules to be analyzed, which is normally called matrix or sample matrix. Processing of the analytes might also comprise changing the solution, containing the analytes or reducing the amount of particular components or particles in the solution for e. g. storage of the analytes. In the context herein, the term "processing" relates to all kind of handling techniques employed to analytes.

US 5,632,957 A discloses a molecular biological diagnostic system including electrodes. Removing small molecules and ions from low volume biological samples is known from US 6,284,117 B1. An integrated planar liquid handling system for MALDI-TOF MS is described in US 5,705,813 A.

### DISCLOSURE

It is an object of the present invention to provide an improved processing of analytes. The object is solved by the independent claim. Further embodiments are subjects of further claims.

Embodiments of the invention use the different electrophoretic mobilities of the charged particles and the analytes in an electric field in order to reduce the concentration of the particles in A) by applying an electric field to the first solution being in the compartment. It is often preferred to reduce the amount of the charged particles, because they might interfere with the further processing of the analytes. During A) the concentration of the particles is reduced in a certain part of the first solution which is located in a certain section of the compartment, because the particles move with a different velocity than the analytes in the electric field Therefore in this special part of the first solution there are still enough analytes to be used for further processing in B), but there is also a reduced amount of the particles.

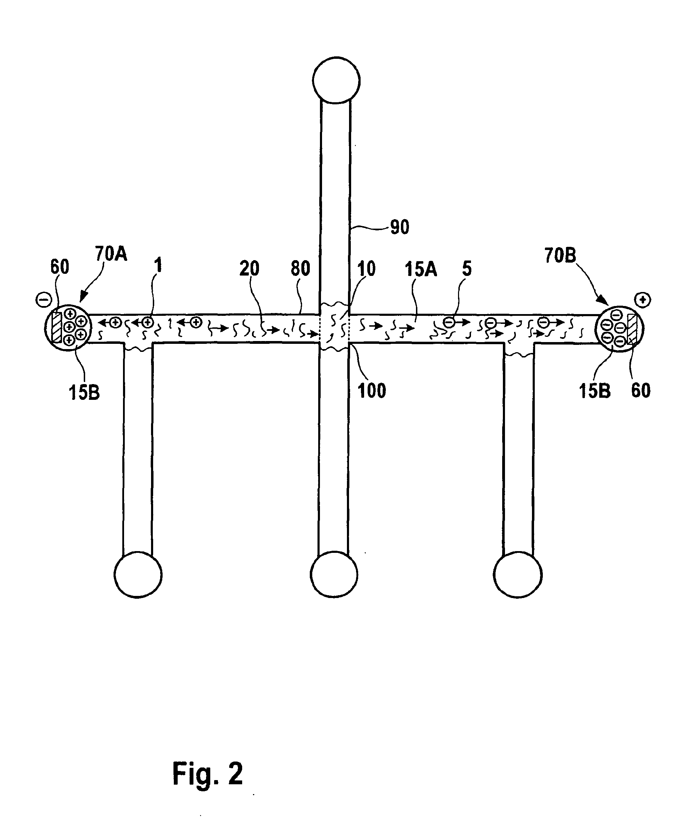

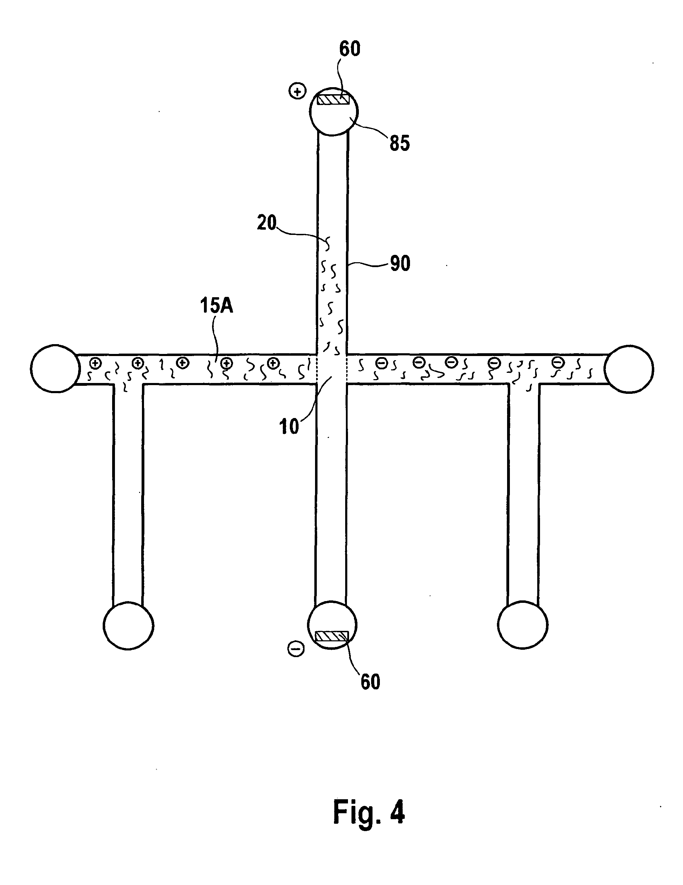

One variant of A) is shown in Figure 2. Due to the reduced concentration of particles, this part of the first solution can then be used in the subsequent B) for further processing. One example of B) is shown in Figure 4, where the analytes are introduced into a second conduit of a microfluidic device for analysis.

Embodiments of the invention are especially suited when just a special fraction or part of the solution containing the analytes ("sample plug") is analyzed, for example in microfluidic chips.

In one embodiment, B) might just comprise an additional handling process, for example transferring the part of the first solution containing the analytes obtained in A) to a different container for storing this part of the first solution. The storing might for example comprise cryogenic freezing of the analytes for long term storage at low temperatures. In this case, A) can reduce the amount of particles potentially impairing the analyte's ability to be stored, so that a reliable storing can be ensured.

In one embodiment, B) further comprises analyzing the analytes. If, for example, polypeptides used as analytes, dissolved in a high salt buffer are introduced into a capillary with low salt conditions for capillary gel electrophoresis, the so-called "sample dispersion" takes place. This effect of sample dispersion leads to a dilution of the polypeptide of up to ten times, therefore complicating the analysis of the polypeptide. On the other hand, if a polypeptide dissolved in a low salt buffer is introduced into high salt conditions in a capillary, the opposite effect, the so-called "sample stacking" might occur. This sample stacking leads to a focusing of the polypeptide in a very narrow band therefore increasing the concentration of the polypeptide in this area.

Moreover, chromatographic methods are often very sensitive to the buffer and especially pH conditions of the protein, so that the buffer of the protein often has to be tightly controlled during a chromatographic analysis of polypeptide or nucleic acids in order to ensure a good chromatographic separation. Therefore the solution containing the analyte molecules to be analyzed often has to be changed before the analysis can take place. This can be done for example by using dialysis. During dialysis the solution containing the molecules to be analyzed is normally sealed inside a dialysis bag comprising a semi-permeable membrane which is immersed in a relatively large volume of a new solution having a composition required for further analysis. Normally this relatively large volume of the new solution, where the dialysis bag is immersed, has to be changed a few times in order to ensure a good changeover of the solution, therefore being very time consuming.

Another method of changing the buffer for analyte molecules is, for example, gel filtration, which is often complicated to carry out. Embodiments of the invention therefore provide an improved method of processing of analytes.

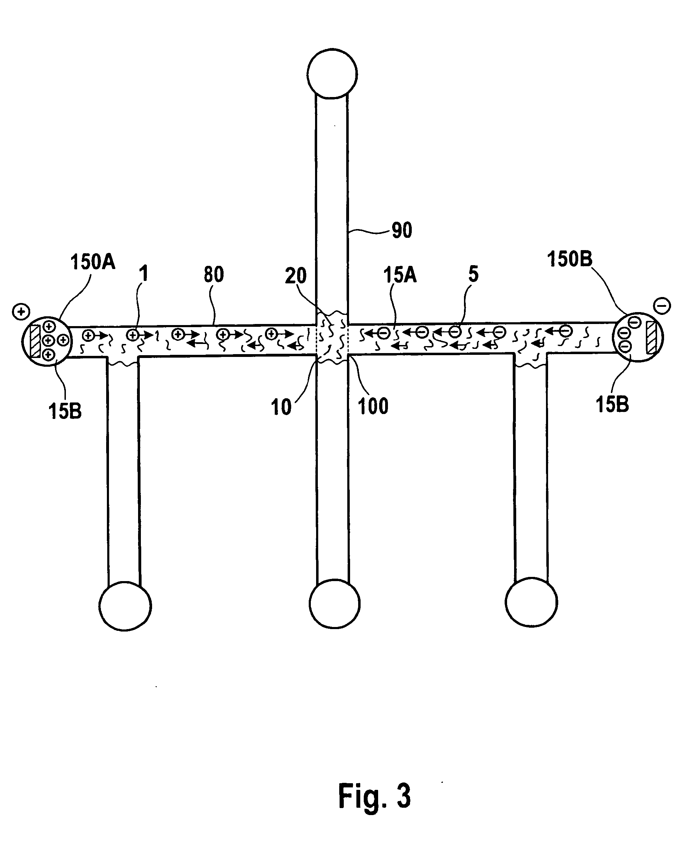

In A) an alternating electric field is applied, as shown e.g. in Figures 2 and 3. It has been found that the analytes, which also move in the electric field, can be refocused again in the part of the first solution having a reduced concentration of interfering particles due to A) by applying an alternating electric field.

Analytes usually have a lower electrophoretic mobility than the particles. This is often the case because most analytes are molecules having a higher molecular weight than the charged particles. The analytes, for example polypeptides or nucleic acids, therefore often have a lower charge/mass ratio than the particles, which are, for example salts like NaCl or MgCl₂, buffer molecules like Tris, nucleotides, amino acids or organic dye molecules. Due to their lower electrophoretic mobility, the analytes move slower in the electric field than the charged particles, therefore creating special sections of the first solution, containing a lower concentration of the charged particles than the analyte molecules. This is especially the case, when the high conductivity sample matrix is surrounded by low conductivity buffers, containing less salts than the sample matrix.

Advantageously an alternating voltage with a frequency of 0.1 to 5 Hz, preferably 0,5 to 2 Hz is applied in A). Such alternating voltage with a very low frequency is especially suited to reduce the concentration of the charged particles in a special part of the solution, without reducing the concentration of the analytes to a great extent. Different frequencies can be chosen by a skilled person depending on the geometry of the compartments, for example conduits and the mobility of the particles and analytes.

A conduit having reservoirs at its end points is used as a compartment containing the first solution, wherein the charged particles are mainly being moved into the reservoirs when the electric field is applied in A).

Conduits, for example capillaries having reservoirs at their end points are especially suited for separation methods like capillary gel electrophoresis in B) in one embodiment. Therefore the first solution is preferably introduced into this conduit even for A), so that the compartment does not need to be changed when proceeding to B).

When using a conduit, the reservoirs of the conduit can be filled with a second solution containing a lower concentration of the charged interfering particles than the first solution.

Since the charged particles are mainly being moved into the reservoirs when applying the electric field in A), the charged particles are advantageously diluted in the reservoirs containing the second solution. Therefore the interfering particles are kept in the reservoirs, even when an alternating voltage is applied in A).

The reservoirs of the conduit can be filled with deionized water. This results in a high dilution of the charged particles.

In one embodiment the polarity of the alternating electric field is changed roughly two times in A). Such a change of polarity is shown in Figures 2 and 3. It has been found that changing the polarity of the alternating electric field roughly two times results in a reliable reduction of the concentration of the interfering particles in a special section of the first solution inside the compartment while the concentration of the analytes in this special part is still high enough to enable a quick and easy analysis of the analyte molecules in B).

Embodiments of the invention are especially suited to reduce the concentration of salts, buffer molecules, nucleotides or amino acids interfering with the analysis in B). These particles are all charged particles, normally having a higher electrophoretic mobility than the analyte molecules, which might be e. g. nucleic acids or polypeptides.

In B) of one embodiment, the analyte molecules can be analyzed by at least one of the following methods: Capillary electrophoresis, capillary gel electrophoresis, chromatography, isoelectric focusing and SDS-PAGE. SDS-PAGE is a very quick and reliable way of analyzing polypeptides according to their mass.

It is also possible to perform other processing different to analysis in B), for example, transferring the part of the first solution obtained in A) to a container for further handling, e. g. storing.

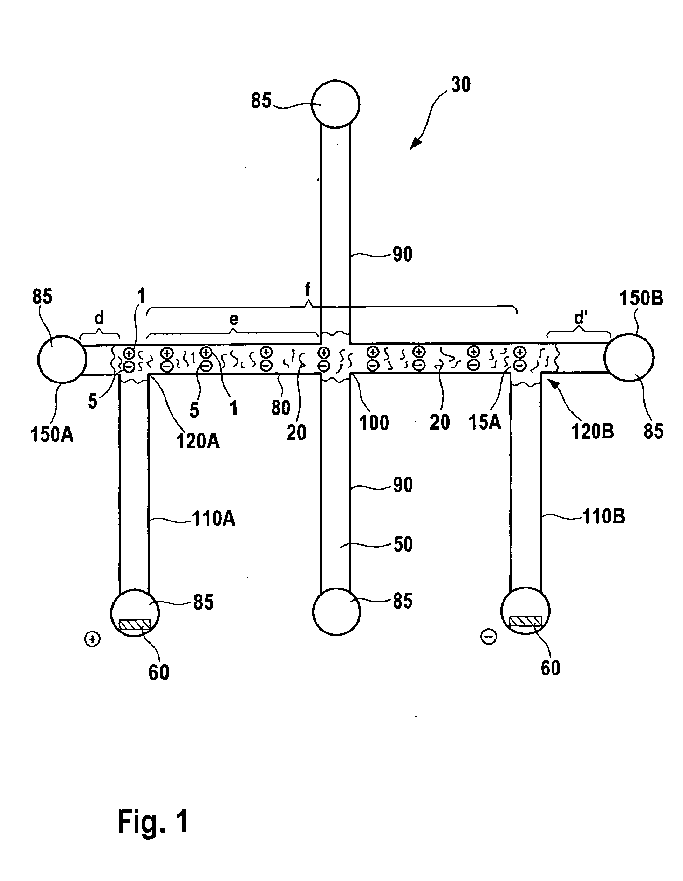

Microfluidic devices are normally small chips, having a substrate comprising glass, polymers, plastics or silicon, having conduits therein. The microfluidic devices are well-suited for carrying out embodiments of the invention because a very small amount of the first solution containing the analytes, e. g. molecules, in a µl-range can be used to analyze the molecules in a very quick way. Microfluidic chips frequently contain wells, so that electrodes, enabling an electrokinetic movement of the solutions through the system of conduits can be introduced via the wells into the microfluidic system. Microfluidic systems with conduits are shown in all of the figures 1 to 5. The solutions containing the analytes can also be introduced into the system of conduits by pressure driven flow, capillary force, gravitational force or centrifugal force.

In one embodiment, a microfluidic device is used having a first conduit for carrying out A) and a second conduit for carrying out B), wherein the second conduit runs diagonally to the first conduit having a junction with the first conduit.

Whereas an electrokinetic movement is used in A), B) can be driven by pressure, centrifugal force, gravitational force, electric energy or capillary force.

Such microfluidic device shows a suitable spatial arrangement of a first and second conduit for carrying out both A) and B) without the need to transfer the part of the first solution with the reduced amount of charged particles to another compartment of the microfluidic device. Such microfluidic device enables a quick transfer of a special part of the first solution being located in the junction between the first and second conduit to the second conduit for further analysis in B) of one embodiment (see for example Figure 4).

When a microfluidic device with a first and second conduit is used, the first solution in A) is applied into the first conduit, and an alternating electric field is applied to that first conduit, thereby reducing the amount of the charged particles in the part of the first solution being located around the junction between the first and second conduit. In the subsequent B) the part of the first solution being located around the junction is then introduced into the second conduit by applying an electric field to said second conduit (see for example Figures 2, 3 and 4). It is also possible to use pressure, centrifugal force, gravitational force, electric energy or capillary force to introduce the first solution being located around the junction into the second conduit.

Such variant can enable an easy procedure to, for example, desalt a part of a sample in A) and then analyze this part in B) in a very easy and quick way without the need to transfer this part into a different compartment of the microfluidic device or into a different analysis tool.

For carrying out embodiments of the present invention, an apparatus might be applied for processing analytes contained in a first solution including charged particles. Such apparatus might comprise a first compartment adapted for receiving the first solution and a first source of electric energy adapted for subjecting a part of the first solution in the compartment to an alternating electric field, thereby reducing the amount of the charged particles in said part of the first solution.

The compartment might be a capillary receiving the first solution and the first source of energy might be a voltmeter applying an alternating electric field.

Advantageously the apparatus further comprises a second compartment having a junction with the first compartment and a second source of energy for introducing the said part of the first solution into the second compartment for further processing.

The second source of energy might be selected from a group of sources generating pressure, centrifugal force, gravitational force, electric energy or capillary force. The second compartment might advantageously comprise a capillary or conduit.

The apparatus for processing the analytes comprises a microfluidic device for carrying out method embodiments of the invention, and comprises:
- a substrate with conduits formed therein, the conduits having wells at their endpoints,
- a first conduit for A) and a second conduit for B), the first and second conduit having a first junction, one third conduit for introduction of the first solution into the device, the third conduit having a second junction with the first conduit,
- the distance between the second junction and the nearest endpoint of the first conduit being equal or smaller than the distance between the first junction and the second junction.

A system of microfluidic channels showing these distances is, for example, shown in Figure 1. A microfluidic device having these distances is especially suited to carry out embodiments of the invention because the distance between the junction of the first and third conduit (second junction) is adapted to A). Since the charged interfering particles normally have a higher mobility in the electric field than the analyte molecules, the charged particles are quickly transported into the well at the endpoint of the first conduit, because the distance between the second junction and the nearest endpoint having a well is small compared to the distance between the first junction and the second junction, where the first solution is normally located after being introduced in the system of conduits (see for example Figure 1). The small distance between the second junction and the nearest well therefore enables a quick reduction of the concentration of the charged interfering particles in the second solution being located in the well.

Embodiments can also be carried out in microfluidic devices, where the distance between the second junction and the nearest endpoint of the first conduit is larger than the distance between the first and the second junction, which furthermore comprise a source for alternating voltage in order to generate an alternating electric field for A). Due to the normally high difference in the electrophoretic mobility between the charged interfering particles and the analytes, the electrophoretic mobility of the charged particles normally being five to ten times larger than the corresponding electrophoretic mobility of the analytes, the charged particles can even pass very large distances in a short period of time. Nevertheless a microfluidic device with a small distance between the second junction and the nearest endpoint of the first conduit is preferred for embodiments of the invention.

Advantageously a fourth conduit is part of the device, that fourth conduit having a third junction with the first conduit. Preferably the distance between the second junction and the nearest endpoint of the first conduit and the distance between the third junction and the nearest endpoint of the first conduit are then both equal or smaller than the distance between the second and the third junction (see for example Figure 1). If this is the case, the first solution is preferably located in the larger part of the first conduit located between the second and the third junction. When an electric field is applied in A) of an embodiment of the invention the charged interfering particles just have to pass a very small distance in order to be kept in the wells at the two endpoints of the first conduit (see e. g. Figure 2).

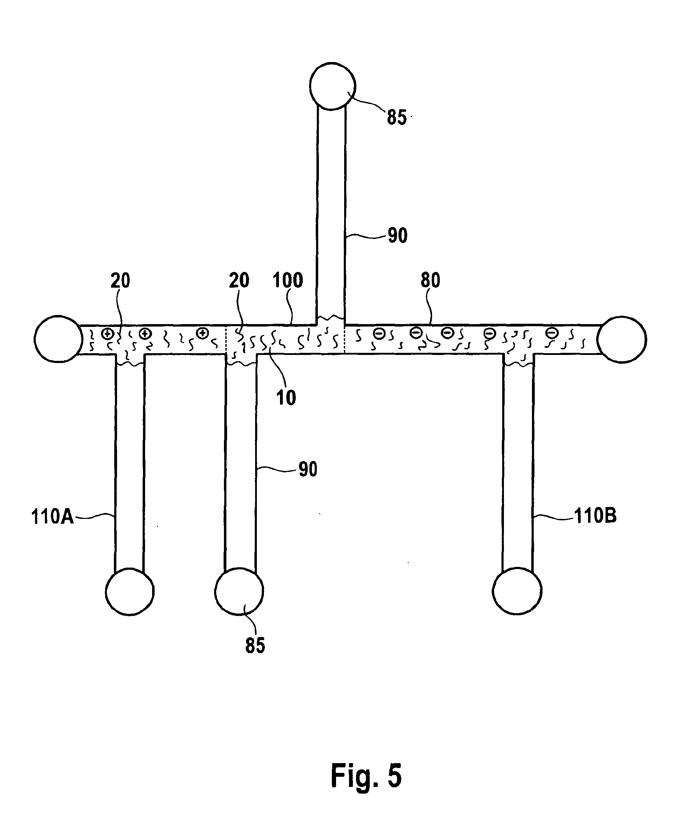

The first junction between the first and second conduit preferably comprises a double T-junction as shown e. g. in Figure 5. Such a double T-junction increases the size of the part of the first solution having a reduced concentration of the interfering particles after A), which can be used for further analysis in B), thereby increasing the amount of the analytes, which can be processed or analyzed.

In the following embodiments of invention will be explained in more detail by the figures. All figures are just simplified schematic representations presented for illustration purposes only.

### DESCRIPTION OF EMBODIMENTS OF THE INVENTION

Figures 1 to 4 depict a schematic course of one method according to an embodiment of the invention.
Figure 5 shows a special arrangement of conduits in a microfluidic device especially suited for carrying out embodiments of the invention.

Referring to Figure 1, a microfluidic device 30 is shown having a system of microfluidic conduits. This system comprises a first conduit 80 having two wells 85 at its endpoints for carrying out a process A) of an embodiment of the invention. This conduit 80 has a first junction 100 with a second conduit 90 also having wells 85 at both of its endpoints for carrying out a process B) of an embodiment of the invention. The microfluidic device also contains a third conduit 110A and a fourth conduit 110B both having a well 85 at its respective endpoints and having a second and a third junction 120A, 120B with the first conduit 80. The system of conduits is preferably filled with a gel matrix 50 suitable for the analysis in B), whereas the wells 85 are preferably filled with a second solution with low conductivity comprising deionized water or a buffer and a gel with low conductivity. The third and fourth conduits 110A and 11 B are used to introduce the first solution 15A via the wells 85 into the system of conduits by applying a voltage across both wells of the third and fourth conduit using the electrodes 60. After having introduced the first solution 15A into the system of conduits, the analyte molecules 20 and the charged particles 1, 5 of solution 15A are mainly located in the first conduit 80. The interfering particles 1, 5 are schematically shown in the form of plus and minus symbols in Figure 1. In order to ensure that the charged interfering particles 1, 5 are preferably kept in the wells 85 at the endpoints of the first conduit 80 in A) of an embodiment, the distance d between the second junction 120A and the nearest endpoint 150A with the well 85 and the distance d' between the third junction 120B and the nearest endpoint 150B with a well 85 are both smaller in Figure 1 than the distance f between the second junction 120A and the third junction 120B.

Turning now to Figure 2, a simplified schematic representation of the analyte molecules and the interfering particles during A) of an embodiment is shown. It can be seen that an electric field is applied in the first conduit 80 by immersing two electrodes 60 in the two wells 85 located at the endpoints 150 A, 150B of the first conduit 80. Both electrodes 60 are immersed in a second solution 15B, which contains a lower concentration of the interfering particles 1, 5 than the first solution 15A. When the electric field is applied across the first conduit 80, both the interfering particles 1, 5 and the analyte molecules 20 begin to move in the electric field. Since the cations and anions 1, 5 are much smaller than the analyte molecules 20, normally larger nucleic acids or polypeptides, the interfering particles 1, 5 move much faster in the electric field than the analyte molecules 20. It can readily be seen in Figure 2 that basically no interfering particles 1, 5 are left in a special section 10 of the first solution 15A, whereas there are still some analyte molecules 20 left due to their lower mobility. This special section 10 of the first solution 15A is roughly located in the middle between the two wells 85 around the first junction 100 between the first conduit 80 and the second conduit 90. The electrophoretic movement of the cations, the anions and the analyte molecules in the electric field e. g. in a SDS-PAGE gel matrix is indicated by small arrows. Due to that movement a concentration gradient is formed in the first solution 15A, wherein the lowest concentration or even low concentration of the interfering particles is located roughly in the middle of the first conduit at the first junction 100, the concentration of the interfering particles 1, 5 increasing in the solution 15A with decreasing distance to the endpoints of the first conduit.

Referring now to Figure 3, the polarity of electric field has been reversed in comparison to Figure 2, when the alternating electric field is applied in A). Due to this change of the electric field the cations 1 and the anions 5 of the interfering particles started to move back into a direction opposite to the direction of movement in Figure 2. The inventor found, that when the wells 85 at the endpoints 150A, 150B of the first conduit 80 contain a solution having a lower concentration of the charged particles than the first solution, preferably deionized water, H₃O⁺ ions and OH⁻ ions might primarily move in the electric field having even a higher electrophoretic mobility than the cations and anions of the interfering particles. Due to the change of the electric field the analyte molecules 20 are also moving, leading to an increase of the amount of analyte molecules 20 in the section 10 of the first solution 15A.

Figure 4 depicts a variant of B). During B) the section 10 of the first solution 15A also called "sample-plug", can be introduced into the second conduit 90 for further analysis by applying an electric field at both endpoints of the second conduit 90 having a well 85. This can be done, for example, by immersing two electrodes 60 into the wells. The analyte molecules 20 therefore move into the second conduit 90 and can be separated and analyzed, for example using SDS-PAGE.

Figure 5 shows an embodiment of a system of conduits in a microfluidic device, wherein the first junction 100 between the first conduit 80 and the second conduit 90 comprises a double T-junction. Due to this double T-junction a larger section 10 results which is located around the first junction 100. When a voltage is applied across the second conduit 90 all the analyte molecules 20 being located in this section 10, are injected into the second conduit 90 for further analysis in B). The double T-junction leads to an increased amount of analyte molecules 20 being available for analysis in B).

The scope of the invention is not limited to the embodiments shown in the figures. Indeed variations, especially concerning the arrangement of the different conduits are possible.

## Claims

1. A method in a microfluidic device for processing analytes (20) in a first solution (15A) containing charged particles (1, 5), wherein the first solution is filling a compartment comprising a first conduit (80) with reservoirs (85) at its end points, the method comprising:
A) subjecting said compartment to an alternating electric field applied between the reservoirs (85), so that the charged particles (1, 5) are mainly moved into the reservoirs (85), thereby reducing the amount of the charged particles (1,5) in a part (10) of the first solution (15A), which is located in a section of the first conduit (80), and
B) subjecting said part (10) of the first solution obtained in A) containing the analytes (20) to further processing.

2. Method according to the previous claim, comprising at least one of:
- an alternating voltage of 0,1 to 5 Hz is applied in A);
- the polarity of the alternating electric field is changed roughly two times in A).

3. Method according to claim 1 or any one of the above claims, wherein
- in B) the analytes (20) are analyzed by at least one of the following methods: capillary electrophoresis, capillary gel electrophoresis, chromatography, isoelectric focussing and SDS-PAGE.

4. Method according to the claim 1 or any of the above claims, wherein the reservoirs (85) of the conduit (80) are filled with:
- a second solution (15B) containing a lower concentration of the charged particles (1, 5) than the first solution (15A).

5. Method according to the claim 1 or any of the above claims, wherein the reservoirs (85) of the conduit (80) are filled with:
low conductivity buffer or deionized water.

6. Method according to claim 1 or any one of the above claims, wherein
the microfluidic device comprises the first conduit (80) for carrying out A) and a second conduit (90) for carrying out B), wherein the second conduit (90) is running diagonally to the first conduit (80) and having a junction (100) with the first conduit (80).

7. Method according to the previous claim,
- wherein in A) the first solution (15A) is applied into the first conduit (80), and an alternating electric field is applied to said first conduit, thereby reducing the amount of the charged particles (1, 5) in the part (10) of the first solution (15A) being located around the junction (100),
- wherein in B) the part (10) of the first solution (15A) being located around the junction (100) is introduced into the second conduit (90) by applying a force to said second conduit (90), the force being selected from: pressure driven flow, evaporation driven flow, gravitational force, centrifugal force, capillary force and electric energy.

## Patentansprüche

1. Verfahren in einer Mikrofluideinheit zum Bearbeiten von Analyten (20) in einer ersten Lösung (15A), die geladene Partikel (1, 5) enthält, wobei die erste Lösung einen Bereich ausfüllt, der eine erste Leitung (80) mit Vorratsbehältern (85) an ihren Endpunkten aufweist, wobei das Verfahren die folgenden Schritte aufweist:
A) Einwirken eines zwischen den Vorratsbehältern (85) angelegten elektrischen Wechselfeldes auf den Abschnitt, sodass die geladenen Partikel (1, 5) vorwiegend in die Vorratsbehälter (85) transportiert werden und **dadurch** die Menge der geladenen Partikel (1, 5) in einem Teil (10) der ersten Lösung (15A) verringert wird, der sich in einem Abschnitt der ersten Leitung (80) befindet, und
B) Fortsetzen der Bearbeitung des in A) gewonnenen Teils (10) der ersten Lösung, welcher die Analyten (20) enthält.

2. Verfahren nach dem vorhergehenden Anspruch, das mindestens eine der folgenden Aktionen aufweist:
- in A) wird eine Wechselspannung von 0,1 bis 5 Hz angelegt;
- die Polarität des elektrischen Wechselfeldes wird in A) ungefähr zweimal geändert.

3. Verfahren nach Anspruch 1 oder einem der obigen Ansprüche, bei dem
- in B) die Analyte (20) unter Verwendung mindestens eines der folgenden Verfahren analysiert werden: Kapillarelektrophorese, Kapillargelelektrophorese, Chromatographie, isoelektrische Fokussierung und SDS-PAGE.

4. Verfahren nach Anspruch 1 oder einem der obigen Ansprüche, bei dem die Vorratsbehälter (85) der Leitung (80) gefüllt sind:
- mit einer zweiten Lösung (15B), die eine geringere Konzentration der geladenen Partikel (1, 5) enthält als die erste Lösung (15A).

5. Verfahren nach Anspruch 1 oder einem der obigen Ansprüche, bei dem die Vorratsbehälter (85) der Leitung (80) gefüllt sind:
- mit einem Puffer mit geringer Leitfähigkeit oder mit entionisiertem Wasser.

6. Verfahren nach Anspruch 1 oder einem der obigen Ansprüche, bei dem
die Mikrofluideinheit die erste Leitung (80) zum Ausführen des Schrittes A) und eine zweite Leitung (90) zum Ausführen des Schrittes B) aufweist, wobei die zweite Leitung (90) quer zur ersten Leitung (80) verläuft und eine Verbindung (100) mit der ersten Leitung (80) aufweist.

7. Verfahren nach dem vorhergehenden Anspruch,
- bei dem in Schritt A) die erste Lösung (15A) in die erste Leitung (80) eingebracht und an die erste Leitung ein elektrisches Wechselfeld angelegt wird, wodurch die Menge der geladenen Partikel (1, 5) in dem Teil (10) der ersten Lösung (15A) verringert wird, der sich im Bereich der Verbindungsstelle (100) befindet,
- bei dem in Schritt B) der im Bereich der Verbindungsstelle (100) befindliche Teil (10) der ersten Lösung (15A) durch Ausüben einer Kraft auf die zweite Leitung (90) in diese überführt wird, wobei die Kraft aus der folgenden Gruppe ausgewählt wird: druckgesteuerte Flüssigkeitsströmung, verdampfungsgesteuerte Flüssigkeitsströmung, Gravitationskraft, Zentrifugalkraft, Kapillarkraft oder elektrische Energie.

## Revendications

1. Procédé exécuté dans un dispositif microfluidique pour traiter des analytes (20) dans une première solution (15A) contenant des particules chargées (1, 5), dans lequel la première solution remplit un compartiment comprenant un premier conduit (80) comportant des réservoirs (85) à ses extrémités, le procédé comprenant les étapes suivantes :
A) la soumission dudit compartiment à un champ électrique alternatif appliqué entre les réservoirs (85), de sorte que les particules chargées (1, 5) se déplacent en grande partie dans les réservoirs (85), réduisant de ce fait la quantité des particules chargées (1, 5) dans une partie (10) de la première solution (15A), qui se trouve dans une section du premier conduit (80), et
B) la soumission de ladite partie (10) de la première solution obtenue à l'étape A) contenant les analytes (20) à un nouveau traitement.

2. Procédé suivant la revendication précédente, comprenant au moins :
- une tension alternative comprise entre 0,1 et 5 Hz est appliquée à l'étape A); ou
- la polarité du champ électrique alternatif est modifiée grossièrement deux fois à l'étape A).

3. Procédé suivant la revendication 1 ou suivant l'une quelconque des revendications précédentes, dans lequel :
- à l'étape B) les analytes (20) sont analysés par au moins un des procédés suivants :
l'électrophorèse capillaire, l'électrophorèse capillaire sur gel, le chromatographie, la focalisation isoélectrique et l'électrophorèse sur gel de polyacrylamide en présence de sodium de dodécyl-sulfate (SDS-PAGE).

4. Procédé suivant la revendication 1 ou suivant l'une quelconque des revendications précédentes, dans lequel les réservoirs (85) du conduit (80) sont remplis de :
- une deuxième solution (15B) contenant une concentration moindre des particules chargées (1, 5) que la première solution (15A).

5. Procédé suivant la revendication 1 ou suivant l'une quelconque des revendications précédentes, dans lequel les réservoirs (85) du conduit (80) sont remplis de :
un tampon de faible conductivité ou d'eau désionisée.

6. Procédé suivant la revendication 1 ou suivant l'une quelconque des revendications précédentes, dans lequel
le dispositif microfluidique comprend le premier conduit (80) pour exécuter l'étape A) et un deuxième conduit (90) pour exécuter l'étape B), dans lequel le deuxième conduit (90) s'étend dans le sens diagonal par rapport au premier conduit (80) et comporte une jonction (100) avec le premier conduit (80).

7. Procédé suivant la revendication précédente,
- dans lequel, à l'étape A), la première solution (15A) est appliquée dans le premier conduit (80), et un champ électrique alternatif est appliqué audit premier conduit, réduisant de ce fait la quantité des particules chargées (1, 5) dans la partie (10) de la première solution (15A) se trouvant autour de la jonction (100);
- dans lequel, à l'étape B), la partie (10) de la première solution (15A) se trouvant autour de la jonction (100) est introduite dans le deuxième conduit (90) en exerçant une force sur ledit deuxième conduit (90), la force étant choisie parmi : un écoulement provoqué par pression, un écoulement provoqué par évaporation, une force gravitationnelle, une force centrifuge, une force capillaire et une énergie électrique.
